# EUROPEAN PATENT APPLICATION

(11) **EP 3 573 217 A1**
(43) Date of publication of application: **27.11.2019**
(21) Application number: 18742054.2
(22) Date of filing: 11.01.2018
(51) Int. Cl.: H02K 3/28, B60T 13/74

(54) **ELECTRIC MOTOR**

(30) Priority: 17.01.2017 JP 2017005734
(71) Applicant: NTN Corporation, Osaka-shi, Osaka 550-0003 (JP)
(72) Inventor: MASUDA, Yui, Iwata-shi Shizuoka 438-8510 (JP)
(74) Representative: Maikowski & Ninnemann Patentanwälte Partnerschaft mbB
(86) International application number: PCT/JP2018/000525
(87) International publication number: WO 2018/135375

(57) **Abstract**

Provided is an electric motor in which an imbalance in electromagnetic force is inhibited even when an abnormality has occurred in an electric power system. The motor (1) is connectable to a plurality of electric power systems (D₁, D₂) and includes: a stator (8) including a plurality of excitation magnetic poles (12) disposed in a circumferential direction and coils (U1, V1, W1 (U2, V2, W2)) provided on the respective poles (12), the coils including, for each of the systems (D₁, D₂), a set of three or more phase coils, the coils carrying respective currents of three or more phases of the corresponding system (D₁, D₂); and a rotor (9) rotatable relative to the stator (8). The coils (U1, V1, W1, U2, V2, W2) of the stator (8) are arranged such that coils adjacent to each other in the circumferential direction are different in phase and associated with different systems.

## Description

### CROSS REFERENCE TO THE RELATED APPLICATION

This application is based on and claims Convention priority to Japanese patent application No. 2017-005734, filed January 17, 2017, the entire disclosure of which is herein incorporated by reference as a part of this application.

### BACKGROUND OF THE INVENTION

### (Field of the Invention)

The present invention relates to an electric motor and specifically relates to an electric motor with enhanced redundancy.

### (Description of Related Art)

Regarding an electric motor, the following techniques have been proposed.
(1) An electric brake apparatus in which an electric motor is coaxially disposed on the outer circumference of a linear motion member (Patent Document 1).
(2) A radial gap motor in which windings associated with two systems are arranged such that the windings of the same phase are adjacent to each other (Patent Document 2).
(3) A radial gap motor in which a set of coils associated with a first system and a set of coils associated with a second system, in which the coils in each set are arranged in a predetermined phase order, are alternately arranged (Patent Document 3).

### [Related Document]

### [Patent Document]

[Patent Document 1] JP Laid-open Patent Publication No. 2003-247576
[Patent Document 2] JP Laid-open Patent Publication No. 2004-201364
[Patent Document 3] JP Laid-open Patent Publication No. 2015-039256

### SUMMARY OF THE INVENTION

For example, in an electric brake apparatus in which an electric motor is used as in Patent Document 1, the electric motor may be required to have very high redundancy. For example, continuation of operation of the electric motor may be required even when an abnormality has occurred in a motor coil, a drive inverter, or the like.

For such a case, for example, a redundant electric motor, including motor coils connecting to a plurality of electric power systems in a predetermined arrangement as in Patent Document 2 or 3 has been proposed. However, when an abnormality has occurred in one or some of the plurality of electric power systems in such a motor, an electromagnetic force in a direction other than the rotation direction may be generated due to an imbalance in excitation magnetic flux, which may increase operating noise or load on a support portion such as a bearing.

In the case where a plurality of coils of the same phase connected to different electric power systems are adjacent to each other, as in Patent Document 2, electromagnetic forces in the rotation direction induced by currents in a space between the coils of the same phase are cancelled out, and thus the space serves no useful purpose. Thus, the torque density decreases, which increases the size and cost of the motor.

In the case where the set of coils associated with the first system and the set of coils associated with the second system, in which the coils in each set are arranged in the same predetermined phase order, are alternately arranged as in Patent Document 3, the above imbalance in electromagnetic force easily occurs particularly in a motor having a small number of poles and a small number of slots. In the above electric brake apparatus, however, a motor having a minimized number of poles can be used in order to decrease an electric angular frequency per number of rotations for the purpose of improving responsiveness. Thus, with the technique of Patent Document 3, electromagnetic force can be imbalanced.

An object of the present invention is to provide an electric motor that inhibits an imbalance in electromagnetic force even when an abnormality has occurred in a part (one system or some systems) of a plurality of electric power systems.

An electric motor of the present invention is an electric motor connectable to a plurality of electric power systems, the electric motor including:
a stator having a plurality of excitation magnetic poles (excited poles) disposed in a circumferential direction and coils the coils provided on the respective plurality of excitation magnetic poles, the coils including, for each of the plurality of electric power systems, a set of three or more phase coils, the coils of the set carrying respective currents of three or more phases of the corresponding electric power system; and
a rotor rotatable relative to the stator, wherein
the coils of the stator are arranged such that coils, of the coils, adjacent to each other in the circumferential direction are different in phase and are associated with different power systems of the plurality of electric power systems.

According to this configuration, when all the electric power systems are in a normal state, currents are supplied from these electric power systems to the coils of all the phases associated with the plurality of systems, respectively, and an electromagnetic force in a rotation direction is generated. Accordingly, the rotor rotates relative to the stator in a desired rotation direction, which drives the electric motor to generate required torque in the rotation direction.

Even when an abnormality has occurred in a part of the plurality of electric power systems, the coils connected to an electric power system in which no abnormality has occurred are distributed in the circumferential direction since coils adjacent to each other in the circumferential direction are different in phase and are associated with different systems. Since currents are supplied to the coils distributed in the circumferential direction, an imbalance in electromagnetic force in a direction other than the rotation direction can be inhibited. Therefore, a load on a support portion such as a bearing can be reduced, so that it is possible to reduce operating noise. In addition, since coils adjacent to each other in the circumferential direction are different in phase, an electromagnetic force in the rotation direction is not cancelled out, which prevents torque decreases as compared to the conventional art. Therefore, it is possible to achieve size reduction and cost reduction of the electric motor.

Each set of the three or more phase coils may be a set of three phases, and the plurality of electric power systems may be two electric power systems including a first system and a second system, and
the coils of the stator may be arranged in the order of a U phase coil associated with the first system, a V phase coil associated with the second system, a W phase coil associated with the first system, a U phase coil associated with the second system, a V phase coil associated with the first system, and a W phase coil associated with the second system.

According to this configuration, regarding the U phase, the V phase, and the W phase, the coils are arranged in a predetermined order (for example, in the order of the U phase, the V phase, and the W phase) in the circumferential direction, and the coils associated with the first electric power system and the coils associated with the second electric power system are arranged alternately in the circumferential direction. Thus, even when an abnormality has occurred in either one of the first system and the second system, the coils associated the other system are evenly arranged in the circumferential direction, so that electromagnetic forces in directions other than the rotation direction which contributes to torque are nearly cancelled out.

A part of a wiring structure that electrically connects the coils associated with the first system may be extended at a radially outer portion of the stator, and a part of a wiring structure that electrically connects the coils associated with the second system may be extended at a radially inner portion of the stator.

As described above, the coils associated with the respective systems are arranged so as to be distributed in the circumferential direction, so that the wires of the coils would be complicated, and thus a space for each wiring structure would be increased. In addition, for example, when the coils in a certain electric power system have caused an abnormality due to breaking or the like during high-speed rotation using flux weakening control or the like, a very large induced voltage would be generated in the broken coil. In order to prevent dielectric breakdown due to such a large induced voltage, a sufficient creepage distance can be ensured between the wires associated with the respective systems.

According to this configuration, since the part of the wiring structure associated with the first system is extended at the radially outer portion of the stator, and the part of the wiring structure associated with the second system is extended at the radially inner portion of the stator, a necessary and sufficient creepage distance can be ensured between the wiring structure associated with the first system and the wiring structure associated with the second system. Therefore, dielectric breakdown due to generation of a very large induced voltage in a coil can be prevented. In addition, since the wiring structures associated with the respective systems are extended as described above, the wires associated with these systems do not cross each other, and thus the wiring structures can be simplified.

A part of a wiring structure that electrically connects the coils associated with the first system may be extended outwardly from a first end in an axial direction of the stator, and a part of a wiring structure that electrically connects the coils associated with the second system may be extended outwardly from a second end in the axial direction of the stator.

In this case as well, a necessary and sufficient creepage distance can be ensured between the wiring structure associated with the first system and the wiring structure associated with the second system. Therefore, dielectric breakdown due to generation of a very large induced voltage in a coil can be prevented. In addition, since the wiring structures associated with the first and second systems are extended as described above, the wires associated with these systems do not cross each other, and the wiring structures can be simplified.

A neutral point for each of the sets of three-phase coils lies on a part of the corresponding wiring structure.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a diagram schematically showing a structure and a conceptual configuration of an electric motor device according to a first embodiment of the present invention;
Fig. 2 is a diagram of an electric motor of the electric motor device in Fig. 1 and is a longitudinal sectional view taken along a line II-II in Fig. 1;
Fig. 3A is a cross-sectional view of the electric motor in Fig. 2 and is a diagram showing a state where an abnormality has occurred in coils of a second group in the electric motor;
Fig. 3B is a cross-sectional view of an electric motor of a conventional example and is a diagram showing a state where an abnormality has occurred in coils of a second group in the electric motor;
Fig. 4 is a diagram schematically showing a structure and a conceptual configuration of an electric motor device according to a second embodiment of the present invention;
Fig. 5 is a diagram schematically showing a structure and a conceptual configuration of an electric motor device according to a third embodiment of the present invention; and
Fig. 6 is a diagram showing a modification of the electric motor in Fig. 2 and is a cross-sectional view taken along the line II-II in Fig. 1.

### DESCRIPTION OF EMBODIMENTS

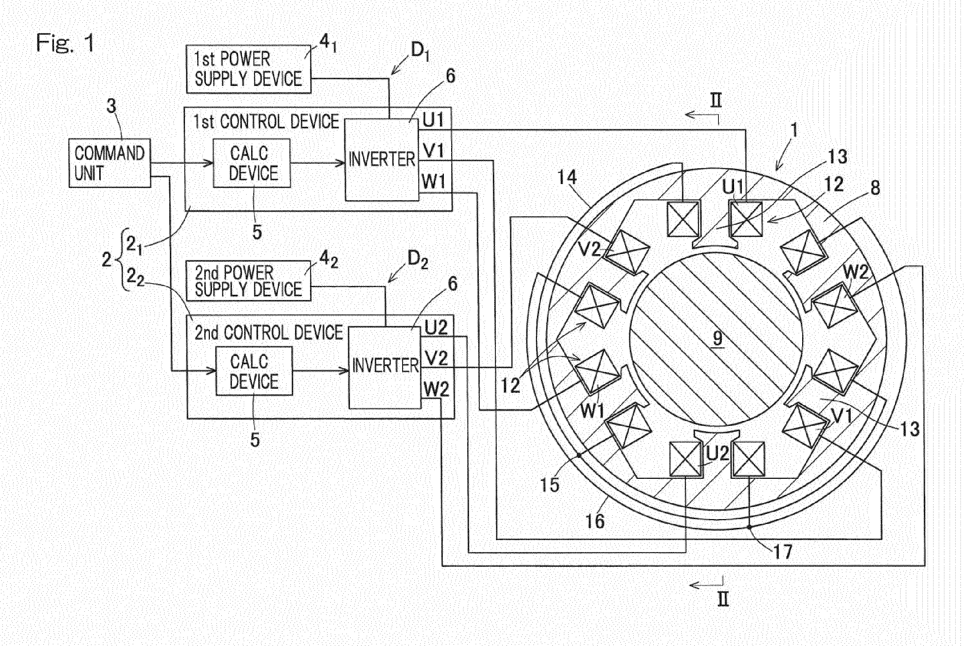

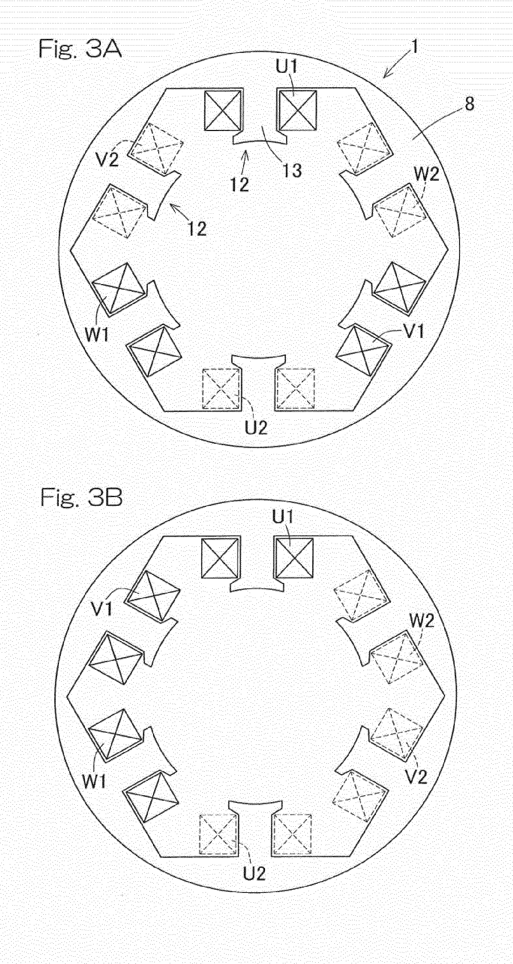

An electric motor device according to a first embodiment of the present invention will be described with reference to Fig. 1 to Figs. 3A and 3B. The electric motor device according to this embodiment may be used for an electric brake apparatus in a vehicle, or the like.

### <Entire Configuration of Electric Motor Device>

Fig. 1 shows a schematic configuration of the electric motor device including redundant first and second groups (first and second system). The electric motor device includes an electric motor 1, a control device 2, and a command unit 3. The electric motor 1 has coils U1, V1, and W1 of three phases belonging to the first group (associated with the first system) and coils U2, V2, and W2 of three phases belonging to the second group (associated with the second system). The control device 2 has first and second control devices 2₁ and 2₂.

A first power supply device 4₁ is connected to the coils U1, V1, and W1 of the first group via the first control device 2₁. The first power supply device 4₁ and wires that connect the first power supply device 4₁ to the coils U1, V1, and W1 of the first group form a first electric power system D₁. A second power supply device 4₂ is connected to the coils U2, V2, and W2 of the second group via the second control device 22. The second power supply device 4₂ and wires that connect the second power supply device 4₂ to the coils U2, V2, and W2 of the second group form a second electric power system D₂.

### <<Control System>>

The command unit 3 is connected to the first and second control devices 2₁ and 22. The command unit 3 is provided, for example, in a higher-order ECU (not shown) that is a higher-order control means for the first and second control devices 2₁ and 22. As the higher-order ECU, for example, an electronic control unit (VCU) that controls the entire vehicle is used. The higher-order ECU has a function of performing integrated control on the first and second control devices 2₁ and 22. The command unit 3 outputs torque force command values to the first and second control devices 2₁ and 2₂, respectively, in accordance with sensor output that depends on an operation amount of an operation member such as a brake pedal that is not shown.

The first power supply device 4₁ independently supplies power to the coils U1, V1, and W1 of the first group and the first control device 2₁. The second power supply device 4₂ independently supplies power to the coils U2, V2, and W2 of the second group and the second control device 2₂.

Each of the control devices 2₁ and 2₂ includes a calculation device 5 and an inverter 6. The calculation device 5 is, for example, a processor such as a microcomputer, or a hardware module such as an ASIC. The calculation device 5 calculates an operation amount of the electric motor 1 from a torque command value from the command unit 3 and various feedback values to supply an operation signal to the inverter 6, such that follow-up control in which output torque follows the torque command value is performed. Examples of the various feedback values include a motor current and/or a motor angle.

The inverter 6 includes, for example, a half-bridge circuit or the like using switch elements such as field effect transistors. The inverter 6 converts DC power to AC power of three phases (U phase, V phase, and W phase). The inverter 6 that performs PWM control, in which the ratio of the widths of pulses in which a power supply voltage is applied to a coil terminal is adjusted, is preferable since the inverter 6 is inexpensive. However, for example, PAM control or the like may be employed to which a booster circuit may be additionally provided.

In the electric motor device, a sensor (not shown) such as an angle sensor, a current sensor, and a thermistor may further be used as appropriate. In addition, each block is provided in Fig. 1 for the sake of convenience, and when being implemented in software or hardware, the function section of each block may be implemented in an integrated or divided manner as appropriate.

### <<Electric Motor 1>>

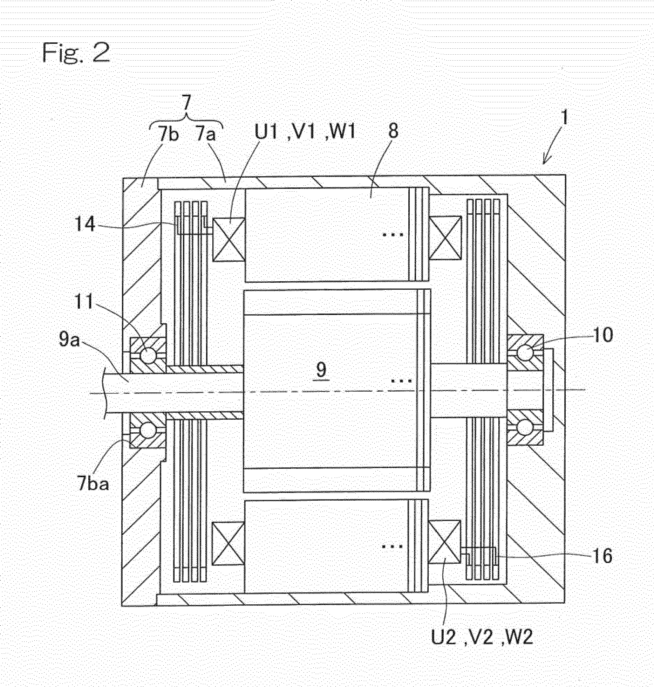

Fig. 2 is a longitudinal sectional view taken along a line II-II in Fig. 1. As shown in Fig. 2, the electric motor 1 has a housing 7, a stator 8, and a rotor 9. The electric motor 1 is, for example, a three-phase synchronous motor. The stator 8 is provided on the inner circumferential surface of the housing 7. The electric motor 1 is of a radial gap type in which the rotor 9 is provided to the inner circumference of the stator 8 with a gap therebetween. The housing 7 has a housing body 7a having a bottomed cylindrical shape, and a lid 7b. The lid 7b closes an opening end at one end side in the axial direction of the housing body 7a. The lid 7b has an opening 7ba through which a part of a motor shaft 9a extends outward in the axial direction.

The stator 8 is fixedly engaged with the inner circumferential surface of the housing body 7a. The rotor 9 has the motor shaft 9a at a center portion thereof. Rolling bearings 10 and 11 are provided on the bottom surface of the respective housing body 7a and the lid 7b coaxially. The motor shaft 9a is rotatably supported by the housing 7 via the rolling bearings 10 and 11.

As shown in Fig. 1, the electric motor 1 has excitation magnetic poles 12 on a total of six slots including two slots for each phase of three-phase (U phase, V phase, and W phase) currents. The excitation magnetic poles 12 are formed by coils wound on the respective slots 13. The rotor 9 preferably has magnetic poles that allow the ratio of the number of poles to the number of slots to be 2:3 to 4:3 with respect to the slots 13, resulting in high output. The number of poles and the number of slots are not limited to the above example, and may be determined as appropriate. However, when the electric motor 1 is configured with as small a number of poles and as small a number of slots as possible such that the performance requirements of the electric motor 1 are met, the electric motor 1 is suitable for application in which high-speed response is required. Each of the rotor magnetic poles may be a permanent magnet, may be a magnetic body having a shape in which permeability has saliency with respect to rotational phase, or may include both.

In the stator 8, the coils adjacent to each other in the circumferential direction are used for phases different from each other and belong to groups different from each other. Specifically, the U phase coil U1 of the first group, the V phase coil V2 of the second group, the W phase coil W1 of the first group, the U phase coil U2 of the second s group, the V phase coil V1 of the first group, and the W phase coil W2 of the second group are arranged in this order in the circumferential direction, specifically, in the counterclockwise direction, as shown in Fig. 1. In other words, regarding the U phase, the V phase, and the W phase, the coils U1, V1, and W1 associated with the first electric power system D₁ and the coils U2, V2, and W2 associated with the second electric power system D₂ are both arranged in a predetermined order in the circumferential direction, and the coils associated with the first electric power system D₁ and the coils associated with the second electric power system D₂ are arranged alternately in the circumferential direction. In this way, the coils in the respective groups are arranged so as to be distributed in the circumferential direction.

A neutral point 15 for the coils U1, V1, and W1 of the three phases of the first group lies on a wiring structure 14 that electrically connects the coils U1, V1, and W1 of the first group. Similarly, a neutral point 17 for the coils U2, V2, and W2 of the three phases of the second group lies on a wiring structure 16 that electrically connects the coils U2, V2, and W2 of the second group.

As described above, the coils in the respective groups are arranged so as to be distributed in the circumferential direction, so that the wires of the coils may be complicated, and thus a space for each wiring structure may be increased. In addition, for example, when the coils in a certain electric power system have caused an abnormality due to breaking or the like during high-speed rotation using flux weakening control or the like, a very large induced voltage may be generated in the broken coil. In order to prevent dielectric breakdown due to such a large induced voltage, a sufficient creepage distance can be ensured between the wires of the respective groups.

To ensure a sufficient creepage distance between the wires of the respective groups, in the electric motor 1, as shown in Fig. 2, a part of the wiring structure 14 which electrically connects the coils U1, V1, and W1 of the first group (a portion on which the neutral point lies) is extended at the outer side of a first end in the axial direction of the stator 8, and a part of the wiring structure 16 which electrically connects the coils U2, V2, and W2 of the second group (a portion on which the neutral point lies) is extended at the outer side of a second end in the axial direction of the stator 8. Although not shown, for example, the part of each wiring structure may be supported by a lead wire such as a bus bar molded from a resin member. Alternatively, a coil wire that forms a wound portion may be further extended, and then a part of the extended portion thereof may be fixed by a mold, varnish, or the like.

### <Comparison with Conventional Example>

In the electric motor according to the embodiment in Fig. 3A, in a state where an abnormality has occurred in the coils U2, V2, and W2 of the second group shown by broken lines, an imbalance in electromagnetic force in a direction other than the rotation direction can be inhibited by applying currents to the coils U1, V1, and W1 of the first group evenly arranged circumferentially and shown by solid lines.

A state is considered where an abnormality has occurred in coils U2, V2, and W2 of a second group shown by broken lines in a conventional example. In this example, coils of the same group are adjacently arranged in the circumferential direction, that is, coils U1, V1, and W1 of a first group are arranged along a semi-circumference and the coils U2, V2, and W2 of the second group are arranged along another semi-circumference, as shown in Fig. 3B. In this conventional example, since the coils U1, V1, and W1 of the first group shown by solid lines are unevenly arranged at one side, when currents are applied to the coils U1, V1, and W1 of the first group, an electromagnetic force in a direction other than the rotation direction is undesirably generated.

### <Advantageous Effects>

In the electric motor 1 described above, when all the electric power systems D₁ and D₂ are in a normal state, currents are supplied from these first and second electric power systems D₁ and D₂ to the coils of all the phases of the first and second groups, respectively, and an electromagnetic force in the rotation direction is generated. Accordingly, the rotor 9 rotates relative to the stator 8 in a desired rotation direction, which drives the electric motor 1 to generate required torque in the rotation direction.

The coils adjacent to each other in the circumferential direction are used for phases different from each other and belong to groups different from each other. As such, even when an abnormality such as breaking has occurred in either one of the first and second electric power systems D₁ and D₂, the coils of the group connected to the electric power system in a normal state are distributed in the circumferential direction. Since currents are supplied to the coils distributed in the circumferential direction, an imbalance in electromagnetic force in a direction other than the rotation direction can be inhibited. Accordingly, a load on each support portion such as the bearings can be reduced, so that it is possible to reduce operating noise. In addition, since the coils adjacent to each other in the circumferential direction are used for phases different from each other, an electromagnetic force in the rotation direction is not cancelled out, which prevents torque decrease as compared to the conventional art. Therefore, it is possible to achieve size reduction and cost reduction of the electric motor 1. Size reduction of the electric motor 1 enables the electric motor 1 to be equipped with various kinds of apparatus. Even when the electric motor 1 has a small number of poles, the motor is suitable to high-speed rotation requirements since magnetic circuits generated after an abnormality occurs in a part of the electric power systems are distributed.

Regarding the U phase, the V phase, and the W phase, the coils are arranged in a predetermined order (for example, in the order of the U phase, the V phase, and the W phase) in the circumferential direction, and the coils for the first electric power system D₁ and the coils for the second electric power system D₂ are arranged alternately in the circumferential direction. Thus, even when an abnormality has occurred in either one of the first electric power system D₁ and the second electric power system D₂, the coils for the other system are evenly arranged in the circumferential direction, so that electromagnetic forces in directions other than the rotation direction which contributes to torque are nearly cancelled out.

Since the part of the wiring structure 14 which electrically connects the coils U1, V1, and W1 of the first group is extended at the outer side of the first end in the axial direction of the stator 8, and the part of the wiring structure 16 which electrically connects the coils U2, V2, and W2 of the second group is extended at the outer side of the second end in the axial direction of the stator 8, a necessary and sufficient creepage distance can be ensured between the wiring structure 14 of the first group and the wiring structure 16 of the second group. Therefore, dielectric breakdown due to generation of a very large induced voltage in a coil can be prevented. In addition, since the wiring structures 14 and 16 of the respective first and second groups are extended as described above, the wires of these groups do not cross each other, and thus the wiring structures 14 and 16 can be simplified.

### <Other Embodiments>

In the following description, parts corresponding to the matters described in the preceding embodiment are designated by the same reference numerals, and the redundant description thereof is omitted. When only a part of a configuration is described, the remaining part of the configuration is the same as that described in the preceding embodiment, unless otherwise specified. The same advantageous effects are achieved by the same configuration. A combination of parts that are specifically described in respective embodiments can be implemented, and, further, embodiments may be partially combined unless there is impairment in such combination.

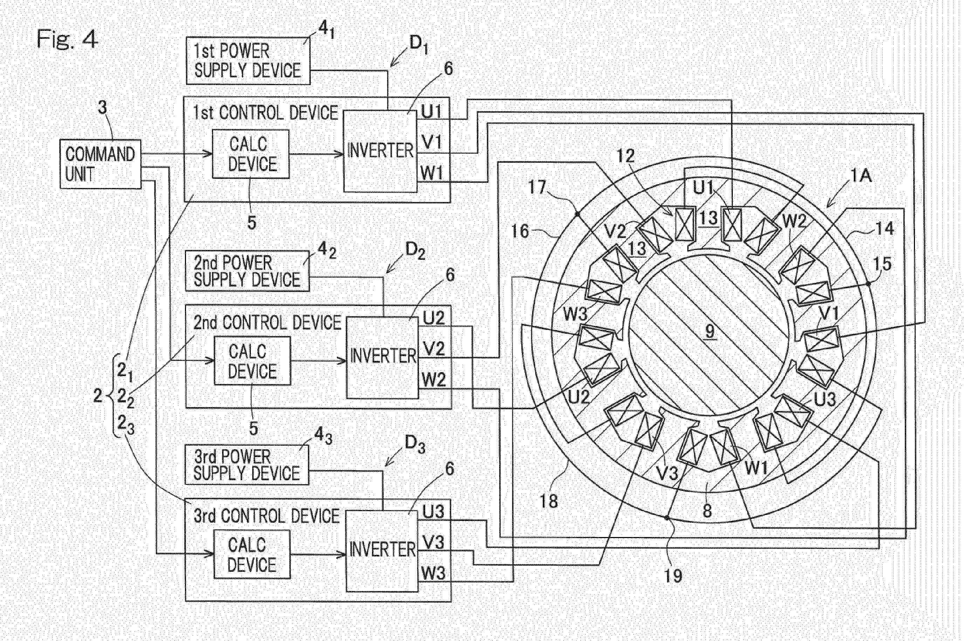

As shown in Fig. 4, an electric motor device according to a second embodiment has an electric motor 1A. The electric motor device including redundant first, second, and third groups. This electric motor device includes a third control device 2₃ in addition to the components of the electric motor device (Fig. 1) according to the first embodiment. A third power supply device 4₃ is connected to coils U3, V3, and W3 of the third group via the third control device 2₃. The third power supply device 4₃ and wires that connect the third power supply device 4₃ to the coils U3, V3, and W3 of the third group form a third electric power system D₃. The electric power systems D₁, D₂, and D₃ independently supply power to the coils of the respective groups. A neutral point 19 for the coils U3, V3, and W3 of the three phases of the third group lies on a wiring structure 18 that electrically connects the coils U3, V3, and W3 of the third group.

The electric motor 1A has excitation magnetic poles 12 on a total of nine slots including three slots for each phase of three-phase (U phase, V phase, and W phase) currents. The excitation magnetic poles 12 are formed by coils wound on the respective slots 13.

The U phase coil U1 of the first group, the V phase coil V2 of the second group, the W phase coil W3 of the third group, the U phase coil U2 of the second group, the V phase coil V3 of the third group, the W phase coil W1 of the first group, the U phase coil U3 of the third group, the V phase coil V1 of the first group, and the W phase coil W2 of the second group are arranged in this order in the circumferential direction, specifically, in the counterclockwise direction, as shown in Fig. 4. In other words, regarding the U phase, the V phase, and the W phase, similar to the first embodiment, the coils of each associated with the corresponding one of the first to third electric power systems are arranged in a predetermined order (in the order of the U phase, the V phase, and the W phase) in the circumferential direction, and the coils associated with the first to third electric power systems D₁, D₂, and D₃ are arranged such that the coils associated with the same electric power system are not adjacent to each other.

In this embodiment, when an abnormality has occurred in any electric power system or the coils connected to the electric power system, the other excitation magnetic poles 12 in a normal state are not completely circumferentially evenly arranged, but the coils of the other groups are distributed in the circumferential direction as compared to a conventional example in which the coils of each group are arranged close to each other. Since currents are supplied to the coils distributed in the circumferential direction, substantially the same advantageous effects as those of the above-described embodiment are achieved.

In Fig. 1 and Fig. 4, the number of slots is minimized with respect to the number of phases and the number of electric power systems, but is not limited to such an example. For example, 12 slots may be provided for the two electric power systems shown in Fig. 1 each associated with coils of three phases. As described above, the number of excitation magnetic poles and the number of slots may be determined as appropriate. For example, in the case of 12 slots, when two electric power systems that are the same as in the configuration in Fig. 1 are connected to coils, a first coil set including the U phase coil of the first group, the V phase coil of the second group, and the W phase coil of the first group, and a second coil set including the U phase coil of the second group, the V phase coil of the first group, and the W phase coil of the second group are provided such that the number of coils of the first coil set is equal to the number of coils of the second coil set, and these coil sets can be arranged at any relative positions. The coils of each coil set are adjacent to each other at a certain interval in the circumferential direction, however.

That is, 12 slots may be configured such that the coils are arranged in the order of the coil U1, the coil V2, the coil W1, the coil U2, the coil V1, the coil W2, the coil U1, the coil V2, the coil W1, the coil U2, the coil V1, and the coil W2 along the circumferential direction. When an abnormality has occurred in any electric power system or when an abnormality has occurred in the coils of any group, the arrangement of the coils other than the coils related to the abnormality is closest to a circumferentially even arrangement, resulting in a preferable coil arrangement. Alternatively, 12 slots may be configured such that the coils are arranged in the order of the coil U1, the coil V2, the coil W1, the coil U1, the coil V2, the coil W1, the coil U2, the coil V1, the coil W2, the coil U2, the coil V1, and the coil W2 along the circumferential direction. For the configuration in Fig. 4, a combination of coils can be similarly determined as appropriate.

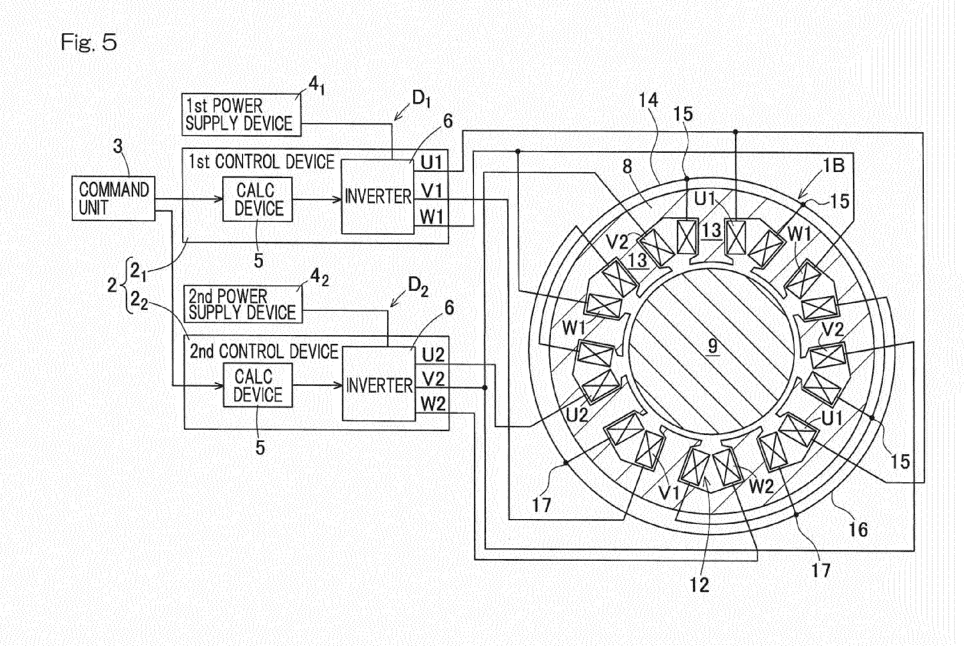

Fig. 5 shows an electric motor device according to a third embodiment, and this electric motor device has an electric motor 1B. In this electric motor device, the redundant configuration in Fig. 1 is applied to the slot configuration in Fig. 4, that is, excitation magnetic poles 12 on a total of nine slots. The electric motor 1B includes three slots for each phase with respect to three-phase (U phase, V phase, and W phase) currents. The nine slots are configured such that the coils are arranged in the order of the coil U1, the coil V2, the coil W1, the coil U2, the coil V1, the coil W2, the coil U1, the coil V2, and the coil W1 along the circumferential direction in the counterclockwise direction, as shown in Fig. 5. In this case as well, the same advantageous effects as those of the above-described embodiments are achieved.

In any of the first to third embodiments, for example, in the case where redundancy of calculation devices or power supply devices is not required, an integrated single calculation device or an integrated single power supply device can be used. Also, even in the case where calculation devices are separately provided as in each embodiment, for example, a single control system may be configured. In such a control system, when all the electric power systems are in a normal state, control calculation such as feedback is performed on a current obtained by averaging currents of all the systems, and a voltage in each electric power system is determined on the basis of a predetermined distribution ratio from a derived control operation amount such as voltage. When an abnormality has occurred in a part of the electric power systems or the like, the control system can utilize only the electric power system in a normal state.

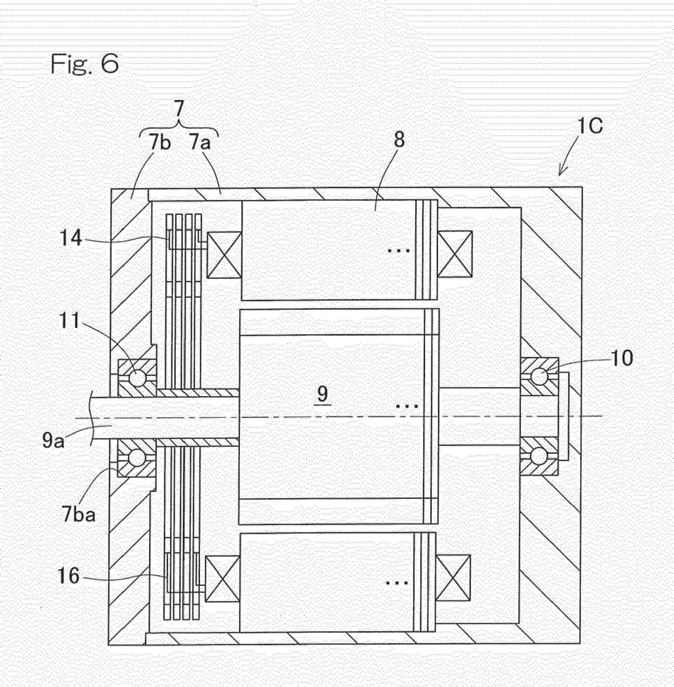

Fig. 6 shows a modification of the electric motor in Fig. 2. As shown in Fig. 6, a part of the wiring structure 14 which electrically connects the coils U1, V1, and W1 of the first group may be disposed at the radially outer side with respect to the stator at the outer side of the first end in the axial direction of the stator 8, and a part of the wiring structure 16 which electrically connects the coils U2, V2, and W2 of the second group may be disposed at the radially inner side with respect to the stator 8 at the outer side of the first end. In this configuration, a necessary and sufficient creepage distance can be ensured between the wiring structure 14 of the first group and the wiring structure 16 of the second group. Therefore, dielectric breakdown due to generation of a very large induced voltage in a coil can be prevented. In addition, since the wiring structures 14 and 16 of the respective groups are extended as described above, the wires of these groups do not cross each other, and thus the wiring structures 14 and 16 can be simplified. This modification can be adopted for the electric motor device according to any of the first to third embodiments.

In each embodiment, the example has been described in which each wiring structure, which is spread widely, has a total of four paths including a portion on which a neutral point lies as well as portions for supplying respective three-phase currents. However, only one or some of the four paths of the wiring structure may be spread widely. For example, by adjusting the number of coils connected to each path or a position (not shown) at which each wire is extended to the motor outside, only the portions on which the neutral points lie may be widely spread.

The electric motors according to the embodiments describe above may be applied to an apparatus other than the electric brake apparatus. The coils may be air-core coils.

Although the present invention has been described above in connection with the preferred embodiments thereof with reference to the accompanying drawings, numerous additions, changes, or deletions can be made without departing from the gist of the present invention. Accordingly, such additions, changes, or deletions are to be construed as included in the scope of the present invention.

### [Reference Numerals]

- 1,1A, 1B, 1C: electric motor
- 8: stator
- 9: rotor
- 12: excitation magnetic pole
- U1, V1, W1: coil associated first system
- U2, V2, W2: coil associated second system
- U3, V3, W3: coil associated third system
- D₁, D₂, D₃: electric power system

## Claims

1. An electric motor connectable to a plurality of electric power systems, the electric motor comprising:
a stator including
a plurality of excitation magnetic poles disposed in a circumferential direction and
coils provided on the respective plurality of excitation magnetic poles, the coils including, for each of the plurality of electric power systems, a set of three or more phase coils, the coils of the set carrying respective currents of three or more phases of the corresponding electric power system; and
a rotor rotatable relative to the stator, wherein
the coils of the stator are arranged such that coils adjacent to each other in the circumferential direction are different in phase and are associated with different electric power systems.

2. The electric motor as claimed in claim 1, wherein
each set of the three or more phase coils is a set of three-phase coils, and the plurality of electric power systems are two electric power systems including a first system and a second system, and
the coils of the stator are arranged in the order of a U phase coil associated with the first system, a V phase coil associated with the second system, a W phase coil associated with the first system, a U phase coil associated with the second system, a V phase coil associated with the first system, and a W phase coil associated with the second system.

3. The electric motor as claimed in claim 2, wherein a part of a wiring structure that electrically connects the coils associated with the first system is extended at a radially outer portion of the stator, and a part of a wiring structure that electrically connects the coils associated with the second system is extended at a radially inner portion of the stator.

4. The electric motor as claimed in claim 2, wherein a part of a wiring structure that electrically connects the coils associated with the first system is extended outwardly from a first end in an axial direction of the stator, and a part of a wiring structure that electrically connects the coils associated with the second system is extended outwardly from a second end in the axial direction of the stator.

5. The electric motor as claimed in claim 3 or 4, wherein a neutral point for each of the sets of the three-phase coils lies on a part of the corresponding wiring structure.
